# DEMANDE DE BREVET EUROPEEN

(11) **EP 0 792 828 A2**
(43) Date de publication de la demande: **03.09.1997**
(21) Numéro de dépôt: 97440012.9
(22) Date de dépôt: 31.01.1997
(51) Int. Cl.: B65H 18/06, B65H 16/06, F16D 1/08

(54) **Dispositif de palier à bascule destiné à porter l'une des extrémités d'une barre enrouleuse**

(30) Priorité: 31.01.1996 FR 9601329
(71) Demandeur: Guttin Christian Sàrl, 38490 Les Abrets (FR)
(72) Inventeur: La désignation de l'inventeur n'a pas encore été déposée
(74) Mandataire: Arbousse-Bastide, Jean-Claude Philippe

(57) **Abrégé**

Dispositif de palier à bascule destiné à porter l'une des extrémités d'une barre enrouleuse.

Il comporte, sur un palier (1) comprenant un axe (2) mené en rotation dans un corps (10) et sur l'extrémité avant (21) duquel peut basculer un volant (4) dans le but de couvrir l'extrémité (60) d'une barre d'enroulement reposant dans un siège (3) garni d'une pièce d'usure (5), une pièce de recouvrement (7) mobile en pivotement autour d'un axe transversal (70) et rappelée vers l'arrière par un ressort (76), et qui, lors du basculement vers l'avant du volant (4), est entraînée par ce dernier pour qu'une de ses parties (71) vienne au contact de l'extrémité (60) de la barre d'enroulement (6) qui repose dans l'empreinte creuse (50) de la pièce d'usure (5), en passant par-dessus un disque (62) de centrage que comporte coaxialement ladite extrémité (60).

## Description

La présente invention a pour objet un dispositif de palier à bascule destiné à porter l'une des extrémités d'une barre enrouleuse, en vue de l'enroulement ou du déroulement de nappes de matériaux, et comportant un siège obturable par basculement d'un volant.

On connaît déjà de tels paliers, qui comportent généralement un axe mobile en rotation dans un corps fixe, dont une extrémité est solidarisée à un organe moteur et dont l'autre comprend d'une part un siège, généralement garni d'une pièce d'usure, et d'autre part un volant basculable autour d'un axe perpendiculaire à l'axe de rotation, apte venir couvrir l'extrémité, de section généralement carrée, de la barre d'enroulement déposée dans ledit siège, en vue du blocage de celle-ci.

En utilisation, l'extrémité de la barre d'enroulement est placée dans le siège, et le volant est basculé manuellement ou automatiquement dès le mouvement de rotation.

Lorsque l'enroulement, ou le déroulement, doit être réalisé à grande vitesse il est nécessaire que le maintien et le centrage de la barre d'enroulement soient réalisés très précisément, afin d'éviter notamment des jeux susceptibles d'entraîner une usure prématurée des pièces de maintien.

Il a ainsi été proposé des dispositifs de palier à bascule où le centrage et le maintien sont réalisés avant le basculement du volant, celui-ci ne servant qu'à sécuriser le maintien. Ces dispositif comportent notamment une pièce mobile autour d'un axe parallèle à l'axe de rotation, qui vient couvrir étroitement le téton d'accouplement, le basculement du volant permettant de couvrir ladite pièce mobile.

Ce dispositif présente toutefois l'inconvénient de ne pas permettre un blocage automatique lors de la mise en rotation, puisqu'il nécessite une intervention manuelle pour le basculement de la pièce mobile.

De plus, ces dispositifs ne permettent pas un ajustement de la pièce mobile sur le téton d'accouplement en fonction des déformations ou usures de celui-ci.

La présente invention a pour but de remédier à ces inconvénients en proposant un palier à bascule destiné à être utilisé à grande vitesse, permettant, outre un parfait maintien de la barre d'enroulement, un blocage automatique sans intervention manuelle.

Le dispositif objet de la présente invention se caractérise essentiellement en ce d'une part l'extrémité de la barre d'enroulement comporte un téton d'accouplement de section non ronde et en extrémité un disque coaxial à ladite barre; d'autre part l'empreinte creuse de la pièce d'usure comporte une partie d'entraînement de forme complémentaire à celle dudit téton d'accouplement et une partie de forme semi-circulaire destinée à loger une partie dudit disque; et d'autre part encore l'extrémité avant de l'axe mené comporte une pièce de recouvrement, mobile en pivotement autour d'un axe transversal, rappelée vers l'arrière par un ressort, et qui, lors du basculement vers l'avant du volant, est entraînée par ce dernier pour venir au contact dudit téton d'accouplement, passant par-dessus ledit disque, dont la partie supérieure se loge étroitement dans une gorge que comporte ladite pièce de recouvrement, le fond de ladite gorge étant à cet effet courbe afin d'épouser ledit disque.

Selon une caractéristique additionnelle du dispositif selon l'invention, le volant comporte au moins un alésage taraudé débouchant au droit de la pièce de recouvrement lorsque le volant est basculé vers l'avant, et dans lequel est vissée une vis dont l'extrémité comprend un pion de bronze destiné à venir au contact de ladite pièce de recouvrement afin d'assurer l'ajustement de celle-ci sur l'extrémité de la barre d'enroulement.

Selon une autre caractéristique additionnelle du dispositif selon l'invention, le volant comporte un alésage débouchant au droit de la pièce de recouvrement lorsque le volant est basculé vers l'avant, et dans lequel est introduit une bille destinée à venir au contact de ladite pièce de recouvrement, en étant maintenue par un ressort lui-même retenu par une vis vissée dans ledit alésage.

Les avantages et les caractéristiques de la présente invention ressortiront plus clairement de la description qui suit et qui se rapporte au dessin annexé, lequel en représente un mode de réalisation non limitatif.

Dans le dessin annexé :
- la figure 1 représente une vue en perspective et en éclaté d'un dispositif de palier à bascule selon la présente invention.
- la figure 2 représente une vue en perspective d'une partie du même dispositif.
- la figure 3 représente une vue en élévation d'une autre partie du même dispositif.

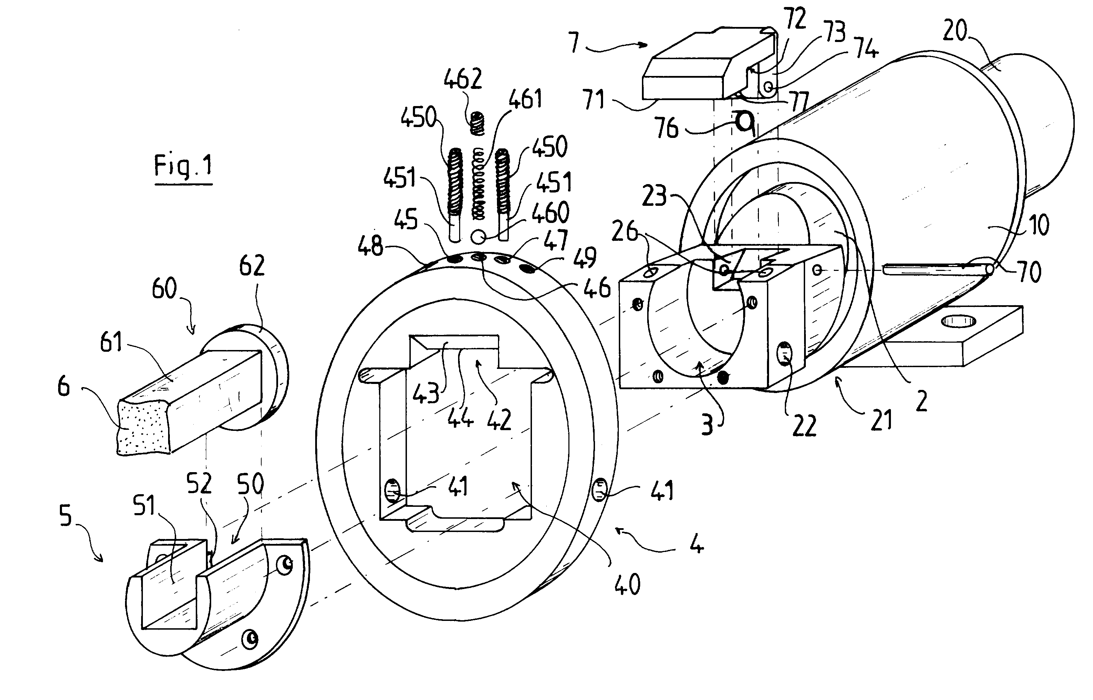

Si on se réfère à la figure 1 on peut voir qu'un palier à bascule 1 selon l'invention comporte de manière connue un corps 10 traversé axialement par un axe 2 dont l'extrémité arrière 20 est destinée à être reliée à un organe moteur, non représenté, et dont l'extrémité avant 21 comporte un siège 3.

Un volant 4 est solidarisé, de manière connue, à l'extrémité avant 21 de l'axe 2 laquelle se loge dans une ouverture 40 pratiquée dans le volant 4, qui peut pivoter vers l'arrière autour de deux axes, non représentés, passant par des trous 41 pratiqués dans le volant 4 et des trous 22, dont un seul est visible, pratiqués dans l'extrémité avant 21, de part et d'autre du siège 3.

Une pièce d'usure 5 est introduite dans le siège 3 qui est de forme complémentaire, et est solidarisée par vissage à l'extrémité avant 21 de l'axe 2.

La pièce d'usure 5 comporte une empreinte 50 destinée à recevoir l'extrémité 60 d'une barre d'enroulement 6, qui comprend deux parties, un téton d'accouplement 61 de section transversale carrée et un disque 62 coaxial à la barre d'enroulement 6.

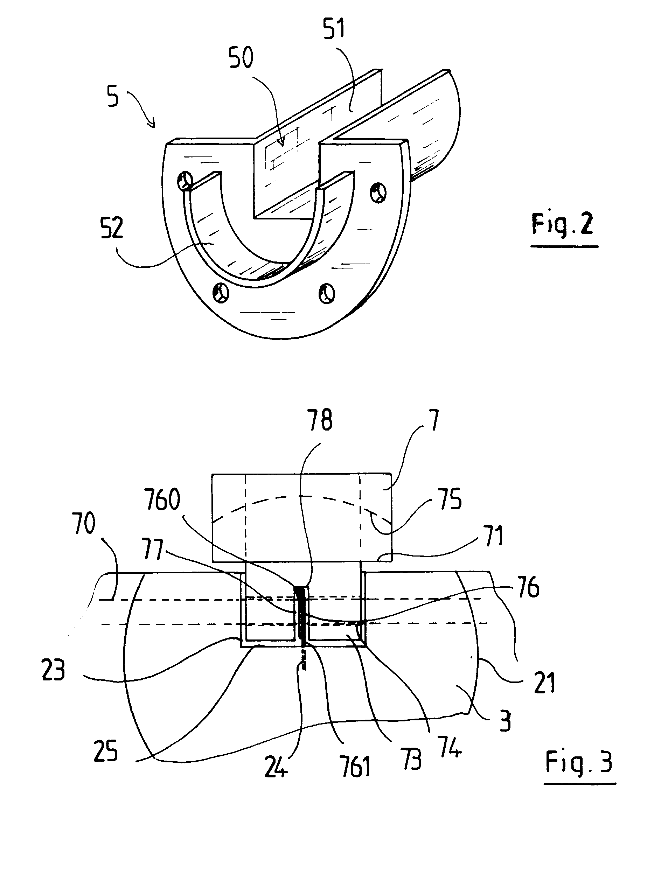

Comme on peut le voir plus précisément sur la figure 2, l'empreinte 50 de la pièce d'usure 5 comporte deux parties, une partie 51 de section carrée destinée à recevoir le téton d'accouplement 61, et une partie semi-circulaire 52 destinée à loger une partie du disque 62.

La partie avant 21 de l'axe 2 comporte en arrière du siège 3 une chape 23 dans laquelle vient s'articuler, autour d'un axe transversal 70, une pièce de recouvrement 7, qui comporte une partie transversale 71 destinée à venir au contact du bord supérieur du téton d'accouplement 61 en passant par dessus le disque 62, dont la partie supérieure prend place dans une gorge transversale 72.

En se référant également à la figure 3, on peut voir que le pivotement de la pièce de recouvrement 7 est réalisé par l'intermédiaire d'un levier 73 percé d'un trou 74 permettant le passage de l'axe 70, et que le fond 75 de la gorge 72 est courbe afin d'épouser le disque 62.

La pièce 7 est rappelée vers l'arrière par un ressort 76 enfilé sur l'axe 70 et placé dans une fente 77 pratiquée dans le levier 73, et dont un brin 760 prend appui contre le fond 78 de la fente 77, tandis que l'autre brin 761 est introduit dans un trou 24 pratiqué verticalement dans le fond 25 de l'ouverture 23.

L'ouverture 40 pratiquée dans le volant 4 comporte une découpe 42 dont le fond comprend, en avant, un pan incliné 43, et en arrière, un pan horizontal 44. Lorsque le volant 4 est basculé vers l'arrière, le pan incliné 43 permet, sous l'effet du ressort 76, le dégagement vers l'arrière de la pièce 7, et lorsque le volant 4 est basculé vers l'avant, le pan horizontal 44 positionne la pièce 7 sur l'extrémité 60.

On peut voir également sur la figure 1 que le volant 4 est percé dans sa région supérieure de trois alésages parallèles 45, 46 et 47, comprenant chacun une portion supérieure taraudée, et débouchant dans le pan horizontal 44 de l'ouverture 42.

L'alésage central 46 contient une bille 460 destinée à venir au contact de la pièce 7 en étant maintenue appliquée par un ressort 461 lui même maintenu par une vis 462, tandis que les alésages latéraux 45 et 47 contiennent chacun une vis 450 munie à son extrémité d'un pion 451 en bronze destiné à venir au contact de la pièce 7.

Les pions 451 permettent d'ajuster la position de la pièce 7 lorsque le volant 4 est basculé vers l'avant fermé, tandis que la bille 460 et le ressort 461 font office d'amortisseur pour remédier à un jeu éventuel.

On peut voir également que le volant 4 comporte deux alésages 48 et 49, disposés de part et d'autres des alésages 45, 46 et 47, renfermant chacun, de manière connue en soi, une bille un ressort et une vis de serrage, non représentés, afin d'assurer l'indexage du volant sur la partie avant 21 de l'axe 2 qui comporte supérieurement à cet effet deux cavités 26 destinées chacune à loger partiellement une bille.

Le fonctionnement du palier selon l'invention est le suivant : le volant 4 est basculé vers l'arrière et l'extrémité 60 de la barre d'enroulement 6 est déposée dans l'empreinte 50 de la pièce d'usure 5, la pièce de recouvrement 7 relevée ne gênant pas cette manoeuvre, puis le volant 4 est basculé vers l'avant avec pour effet de rabattre la pièce 7 qui passe par dessus le disque 62 qui se trouve pris entre l'empreinte semi-circulaire de la pièce d'usure 5 et le fond courbe 75 de la pièce 7.

## Revendications

1. Dispositif de palier à bascule destiné à porter l'une des extrémités d'une barre enrouleuse, en vue de l'enroulement ou du déroulement de nappes de matériaux, du type comportant un axe mené en rotation tournant dans un palier et sur l'extrémité avant duquel peut pivoter un volant afin de couvrir, en vue de son blocage, l'extrémité d'accouplement d'une barre enrouleuse qui est déposée dans l'empreinte creuse d'une pièce d'usure, caractérisé en ce que d'une part l'extrémité (60) de la barre d'enroulement (6) comporte un téton d'accouplement (61) de section non ronde et en extrémité un disque (62) coaxial à ladite barre; d'autre part l'empreinte creuse (50) de la pièce d'usure (5) comporte une partie d'entraînement (51) de forme complémentaire de celle dudit téton d'accouplement (61) et une partie (52) de forme semi-circulaire destinée à loger une partie dudit disque (62); et d'autre part encore l'extrémité avant (21) de l'axe mené (2) comporte une pièce de recouvrement (7), mobile en pivotement autour d'un axe transversal (70), rappelée vers l'arrière par un ressort (76), et qui, lors du basculement vers l'avant du volant (4), est entraînée par ce dernier pour qu'une de ses parties (71) vienne au contact dudit téton d'accouplement (61) en passant par-dessus ledit disque (62), dont la partie supérieure se loge étroitement dans une gorge (72) que comporte ladite pièce de recouvrement (7), le fond (75) de ladite gorge (72) étant à cet effet courbe afin d'épouser ledit disque (62).

2. Dispositif selon la revendication 1 caractérisé en ce que le volant (4) comporte au moins un alésage taraudé (45, 47) débouchant au droit de la pièce de recouvrement (7) lorsque le volant (4) est basculé vers l'avant, et dans lequel est vissée une vis (450) comprenant en extrémité un pion de bronze (451) destiné à venir au contact de ladite pièce de recouvrement (7) afin d'assurer, en fonction du vissage, l'ajustement de celle-ci surladite pièce de recouvrement sur l'extrémité de la barre d'enroulement (6).

3. Dispositif selon la revendication 1 ou la revendication 2 caractérisé en ce que le volant (4) comporte un alésage (46) débouchant au droit de la pièce de recouvrement (7) lorsque le volant (4) est basculé vers l'avant, et dans lequel est introduit une bille (460) destinée à venir au contact de ladite pièce de recouvrement (7), en étant maintenue par un ressort (461) lui-même retenu par une vis (462) vissée dans ledit alésage (46).
